(19)

Europäisches Patentamt
European Patent Office
Office européen des brevets

(11) **EP 2 485 429 A2**

(12) **EUROPEAN PATENT APPLICATION**
published in accordance with Art. 153(4) EPC

(43) Date of publication:
08.08.2012 Bulletin 2012/32

(51) Int Cl.:
*H04L 9/08* (2006.01)

(21) Application number: **10818448.2**

(22) Date of filing: **12.08.2010**

(86) International application number:
**PCT/ES2010/070555**

(87) International publication number:
**WO 2011/036322 (31.03.2011 Gazette 2011/13)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.09.2009 ES 200930742**

(71) Applicant: **Telefónica, S.A.**
**28013 Madrid (ES)**

(72) Inventors:
• **SOTO RODRÍGUEZ, Mercedes**
**E-28013 Madrid (ES)**
• **MENÉNDEZ GONZÁLEZ, David**
**E-28013 Madrid (ES)**

• **POZAS ÁLVAREZ, José Antonio**
**E-28013 Madrid (ES)**
• **MARTÍN AYUSO, Vicente**
**E-28013 Madrid (ES)**
• **LANCHO LANCHO, Daniel**
**E-28013 Madrid (ES)**
• **MARTÍNEZ MATEO, Jesús**
**E-28013 Madrid (ES)**

(74) Representative: **Gonzalez-Alberto Rodriguez, Natalia**
**GARRIGUES IP, S.L.P.**
**Hermosilla, 3**
**28001 Madrid (ES)**

(54) **SYSTEM FOR INTEGRATION OF CHANNELS WITH QUANTUM INFORMATION IN COMMUNICATION NETWORKS**

(57) System for integration of channels with quantum information in communication networks. The network includes fibre-optic segments (3) and conventional equipment (1, 2, 4), whilst a quantum key distribution (QKD) system has devices for the exchange of information by means of a quantum channel (7, 8). The system comprises at least one filter (6) for each one of said exchange devices (7, 8) and at least one unit for managing conventional and quantum channels (5) that reduces the noise in quantum channels and has at least the following functions: attenuation of insertion power of conventional channels in the network; different polarizations in the various conventional and quantum channels; and changes of wavelength assignment in not only conventional but also quantum channels.

FIG. 1

EP 2 485 429 A2

## Description

Object of the Invention

As expressed in the title of this specification, the present invention relates to a system for integration of channels with quantum information in communication networks, the essential purpose of which is to provide technical means facilitating integration of conventional and quantum channels in optical communication networks, particularly applicable to quantum key distribution systems generating cryptographic keys between two ends for secret communications.

The invention belongs to the field of communications, and specifically to integration in passive optical networks (PON) of channels transporting quantum information. Two groups can be distinguished within PON networks: metropolitan area networks (MAN) and access networks (FTTx). In turn, within the PON access networks there can be a division into two subgroups, consisting of time-division multiplexing access networks (TDM-PON) and frequency-division multiplexing access networks (WDM-PON). The invention is applicable to all the types of networks (PON) that have just been mentioned.

An object of the invention is to integrate a system of transporting information by means of quantum channels, such as for example a quantum key distribution system within metropolitan area and access networks, in the most efficient and least intrusive manner possible, achieving the lowest number of changes in network infrastructures.

Background of the Invention

A system for communication of information by means of quantum channels is that which uses the physical properties imposed by quantum mechanics as a means for encoding information. Any type of information can thus be transmitted between two points. Specifically, this document explicitly relates to quantum key distribution (QKD) systems, which use the information encoded in quantum particles to generate cryptographic keys between two ends. These particles are normally known as qubits (quantum bits).

A quantum key distribution system consists of two pieces of equipment which exchange a key using a protocol based on the principles of quantum physics [1, 2, 3, 4]. Each of those pieces of equipment (the ends of a QKD system) are called Alice and Bob respectively, being indicated with reference numbers 7 and 8, also respectively, in the drawings of this specification. For this exchange to be carried out, the ends of a QKD system (Alice and Bob) are connected through two communication channels: a quantum or private channel and a public or conventional channel. The transmission means commonly used for quantum channel is fiber-optic and the physical element used for encoding the qubit is the photon [5].

In addition to sending information over the quantum channel, a QKD system requires the conventional exchange of information for reconciliation, correction and distillation of a key. Reconciliation of the key exchanged through the quantum channel is the process whereby the ends of a QKD system exchange information about the bases used in encoding and decoding of qubits transmitted by the quantum channel. After reconciliation of the key, the latter must be corrected to prevent possible discrepancies therein due to the errors occurring during exchange at the quantum level. Correction of the key produces the first key identical at both ends of the communication and requires an error correction protocol which publishes information of the key through a conventional channel [6]. The error rate occurring in a QKD system is referred to as QBER [5]. Finally, distillation of a secret key at both ends of the communication requires the exchange of additional information through the public (or conventional) channel in the privacy amplification phase [7, 8].

Communication in the channels joining the ends of a system for exchange of quantum information, quantum and conventional channels, can be done through the same means using time-division modulation (TDM) or frequency-division modulation (WDM) techniques. Modulation techniques also allow the use of other communication channels and, therefore, the integration of these systems in conventional communication systems.

Of the two mentioned modulation techniques, the transmission of signals is performed in different channels and simultaneously only in frequency-division modulation (WDM), allowing the increase in the volume of information transmitted in the same means per unit of time. The increase in the transmission capacity of the means is of particular interest for at least being able to speed up communications required by protocols used in QKD, such as base reconciliation, error correction and privacy amplification, although there are alternatives for the distillation of keys, such as LDPC codes, which allow reducing network traffic between the ends of a QKD system. The two standards for frequency multiplexing in an optical transmission channel depending on the distance between channels are: Coarse and Dense WDM (CWDM and DWDM, respectively).

Commercial optical networks constructed by means of passive technology, i.e., passive optical networks (PON), allow the use of quantum communication channels because the signals transmitted in a PON network are not intercepted by the presence of intermediate components: repeaters, amplifiers, etc. These channels can simultaneously coexist with other channels by means of frequency-division modulation technologies.

Both metropolitan area networks (MAN) and access networks are based on PON technologies.

PON metropolitan area networks are generally constructed following a ring-shaped topology in which different nodes are located. Signals reaching each node can travel through it or be deviated towards an output path depending on the frequency of the incoming signal. This routing of information is performed as a result of the frequency multiplexing of different communication channels, using CWDM or DWDM technologies for example, which allows maintaining the passive character of these networks, and therefore the information transmitted through a quantum channel remains unchanged.

These networks support large data streams between their different nodes, which in turn can be separated by large distances, which usually entails the use (by default) of high emission powers when commencing communication using PON technology.

Each of the nodes of a metropolitan area network is usually connected to one or more access networks.

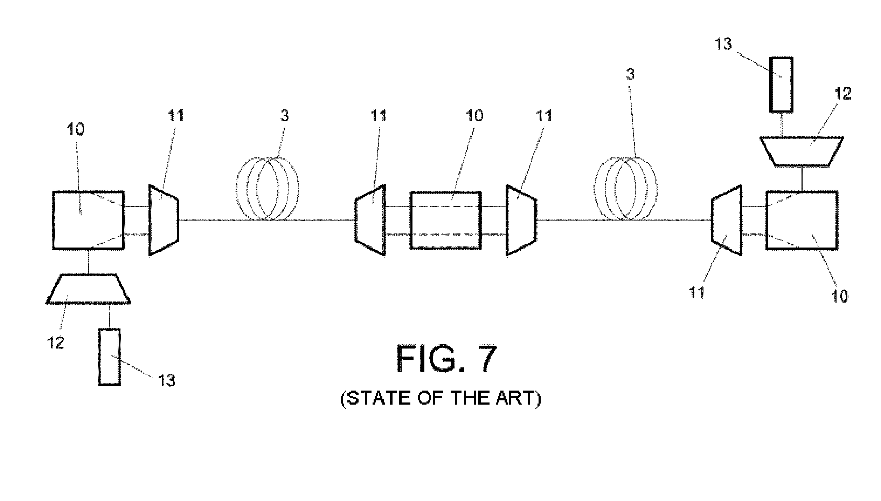

The structure of a metropolitan area network node can be seen in Figure 7. In each node there is a multiplexer that separates all the channels arriving through the fiber. Furthermore, it has another multiplexer in which the output channels are joined by means of frequency multiplexing to travel through the fiber to the next node. By means of the configuration of the node deciding the action that a switch must take, each channel continues to the next hop or is redirected such that it exits the ring. The same occurs with the input channels, and it is redirected to the fiber of the ring by means of a switch.

PON access networks are communication networks intended for the connection of end users with a global communication network. Access networks are also known as last mile networks.

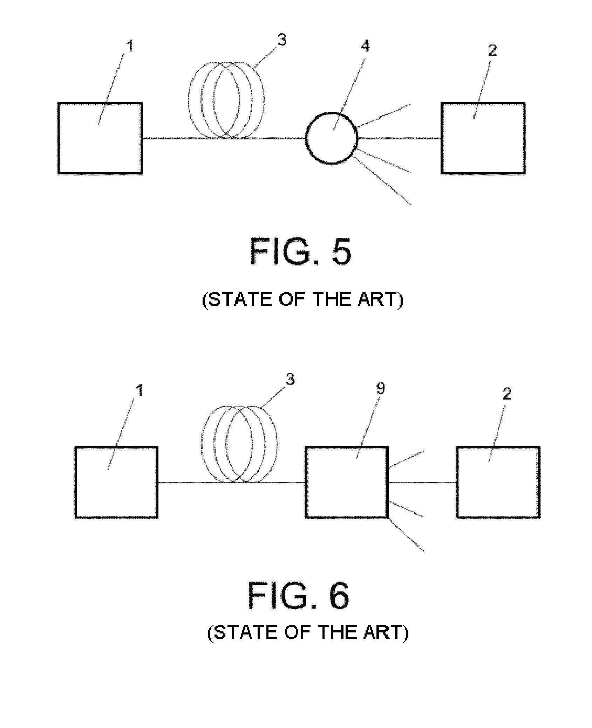

Their structure consists of a device which is located in the head-end of the provider responsible for managing communications with users (known as OLT, Optical Line Terminal, in ITU nomenclature). This device is connected to a single fiber-optic line shared by all the users of the network. This line is connected at the other end with a distributor, which separates the channels and sends them to each user through a dedicated fiber-optic line exclusive for each of them. At the user end, it is connected to a device responsible for centralizing communications with the user and acting as a bridge for the interface used by the user (known as ONT, Optical Network Terminal, in ITU nomenclature, and ONU, Optical Network Unit, in IEEE nomenclature). This structure can be observed in Figure 5 and Figure 6.

The channels propagated from the head-end of the provider to the user are known as downstream channels, whereas those propagated in the opposite direction are known as upstream channels.

Specifically, TDM-PON networks use a technique of line sharing between users by time division. This means that each user is dynamically assigned time spans in which the optical means will be available for sending and receiving information therethrough. Therefore, in a given a moment in time, the optical means are only being used by one end user, preventing signal collisions.

The structure of an example of networks of this type can be seen in Figure 5. The different components forming the network can be observed in said figured.

WDM-PON networks allow different users to share the same means by frequency-division multiplexing of the transmitted signals. Each user can have an individual channel such that all the users of a WDM-PON network can be sending and receiving information at the same time through a single access network.

An example of networks of this type can be seen in Figure 6. Its structure and the different components forming the network can also be observed in the figure.

The use of QKD systems simultaneously with other communications has been patented since 1994 [10], but the application of channel multiplexing without control of the power of the emitted channels has important limitations in terms of the maximum distance attainable in the exchange of keys of QKD systems. The implementation of QKD systems within commercial PON networks requires the use of a series of additional components, as well as management of the configurations used in conventional channels to prevent effects of interference on incorporated quantum channels.

The simultaneous transmission of information through different communication channels can interfere on channels transporting quantum information when the simultaneity is by means of frequency modulation (WDM). Some of the physical effects that can cause this interference are scattering and effects of intermodulation, such as four wave mixing (FWM), which will be described below.

● Scattering. In optical communications there are two main types of scattering that can affect communications of a channel transporting quantum information, elastic or Rayleigh scattering and inelastic or Raman scattering. The former generates photons in the same frequency but in the direction opposite the pulse. It therefore corresponds to systems of quantum communication to solve it. In the case of the patent, the effect at hand in systems with WDM is of the second type, known as Raman scattering. Due to this effect, transmitted pulses generate photons in other frequencies different from the original frequencies. This means that frequencies different from those used for a quantum channel can cause the occurrence of photons in said channel, interfering in the communication of quantum information. This effect occurs with an intensity that is directly proportional to the distance traveled by signals in the transmission means, in addition to depending on the composition thereof and the power of the original pulse. Furthermore, the effect does not occur with the same intensity throughout the entire spectrum, but is greater in near-by frequencies and slightly greater in higher frequencies.

● Intermodulation. The simultaneous transmission of information by means of WDM through three (or more but always in an uneven number) communication channels with different frequencies, f1, f2, and f3, in the same means (such as fiber-optic in the case at hand), can cause the occurrence of photons in a fourth frequency (more than one in the event that there are more than three original frequencies), f4. Those photons are formed by the distortion (scattering) of incident pulses, and the wavelength in which they occur is a linear combination of the wavelengths of the incident pulses:

$$f4 = +/- f1 +/- f2 +/- f3.$$

Interference in quantum channel translates into an increase in the error rate in said channel, which limits the use of channels of this type.

Patent number ES2126143 indicates the possibility of communicating a QKD emitter with multiple receivers in a multiplexed network with conventional channels. Patent number US7248695, by MagiQ Technologies, Inc, indicates the need for a bandpass filter to separate the quantum channel from the remaining conventional channels.

Patent number US2007/0212063 proposes the use of wavelength multiplexing of quantum channels and conventional channels.

Although some of the strategies disclosed in these patents are also shared in this application, other added strategies must be followed when it is necessary to assure the correct operation of the system which are not contemplated in other documents:

● Attenuation of conventional channels to minimize noise created by Raman.
● Suitable choice of quantum channel wavelength to prevent effects of disruption thereof.
● Assignment of different polarization to conventional and quantum channels such that filtering is facilitated.

Furthermore, in relation to the solution provided by the introduction of quantum channels in WDM-PON access networks, no earlier patent found mentions the possibility of the use of bands different from commercial bands for the multiplexing of quantum channels with conventional channels.

Lists of the acronyms and abbreviations used in this specification as well as the literature references indicated in brackets in the present background of the invention section are provided below.

ACRONYMS AND ABBREVIATIONS:

| APD, | Avalanche Photo-Diode |
|---|---|
| AWG, | Arrayed Waveguide Grating |
| BLS, | Broadband Light Source |
| CWDM, | Coarse WDM |
| DWDM, | Dense WDM |
| FFTH, | Fiber To The Home |
| FFTx, | Fiber To The Home, Kerb, Building |
| FWM, | Four Wave Mixing |
| GPON, | Gigabit PON |
| LDPC, | Low-Density Parity Check |
| MAN, | Metropolitan Area Network |
| OLT, | Optical Line Termination |
| ONT, | Optical Network Termination |
| PON, | Passive Optical Network |
| QBER, | Quantum Bit Error Rate |
| QKD, | Quantum Key Distribution |
| ROADM, | Reconfigurable Optical Add-Drop Multiplexer |
| TDM, | Time-Division Multiplexing |
| TDM-PON, | Time-Division Multiplexing PON |
| VOA, | Variable Optical Attenuator |
| WDM, | Wavelength-Division Multiplexing |
| WDM-PON, | Wavelength-Division Multiplexing PON |

LITERATURE REFERENCES OF THIS SECTION OF THE SPECIFICATION:

[1] C. H. Bennett, G. Brassard, "Quantum cryptography: public key distribution and coin tossing", Proceedings of IEEE International Conference on Computers, Systems and Signal Processing, IEEE press, pp. 175-179, 1984.

[2] A. Ekert, "Quantum Cryptography Based on Bell's Theorem", Phys. Rev. Lett. 67, Is. 6, pp. 661-663, 1991.

[3] C. H. Bennett, "Quantum Cryptography Using Any Two Nonorthogonal States", Phys. Rev. Lett. 68, No. 21, pp. 3121, 1992.

[4] V. Scarani, A. Acin, G. Ribordy, N. Gisin, "Quantum cryptography protocols robust against photon number splitting attacks for weak laser pulse implementations", Phys. Rev. Lett. 92, 2002.

[5] N. Gisin et al., "Quantum Cryptography", Rev. Mod. Phys. 74, pp. 145, 2001.

[6] G. Brassard, L. Salvail, "Secret-key reconciliation by public discussion", Lecture Notes in Computer Science 765, pp. 411-423, 1993.

[7] C. H. Bennett et al., "Privacy amplification by public discussion", SIAM J. Comput. 17, No. 2, 1988.

[8] C. H. Bennett et al., "Generalized Privacy Amplification", IEEE Transactions on Information Theory 41, No. 6, 1995.

[9] C. Elliott et al., "Current status of the DARPA Quantum Network", BBN Technologies, arXiv: quant-ph/0503058, 2005.

[10] Townsend *et al.*, "Key distribution in a multiple access network using quantum cryptography", European Patent no. 94925577.2, 1994.
[11] Amitabha Banerjee et al., "Wavelength-division-multiplexed passive optical network (WDM-PON) technologies for broadband Access: a review", 2005.

Description of the Invention

To achieve the objectives and prevent the drawbacks indicated in preceding sections, the invention consists of a system for integration of channels with quantum information in communication networks, applicable in passive optical networks (PON) which can provide support to conventional telecommunication channels and to quantum channels; at least one quantum key distribution (QKD) system generating cryptographic keys between two ends for secret communications being able to be included in quantum channels; wherein the PON network includes fiber-optic segments and conventional equipment, whereas the QKD system has a first device for the exchange of information by means of a quantum channel and a second device for the exchange of information by means of a quantum channel.

In a novel manner, the system according to the invention comprises at least one filter for each of said devices for the exchange of information by means of a quantum channel and at least one conventional and quantum channel management unit in the set of said system for integration; this management unit being a device for the reduction of noise in quantum channels having at least the following functions:

- Attenuation of insertion power of conventional channels in the PON network;
- Different polarizations in the various conventional and quantum channels;
- Changes of wavelength assignments in not only conventional but also quantum channels;

thereby effects of interference on quantum channels being prevented.

In the preferred embodiments of the invention, the mentioned filter is the narrowest bandpass filter possible for the corresponding application.

In addition, in the preferred embodiments of the invention, said filter consists of either a device which, in addition to the filter of the quantum channel, includes means for connecting channels in the fiber-optic segments or else in a single filter intercalated in the quantum channel.

In the preferred embodiments of the invention, the mentioned management unit has, in addition to the mentioned functions, the function of temporary disconnection of specific conventional channels which have a low priority.

In applications where the PON network is a WDM-PON access network (with frequency multiplexing), the management unit uses frequency bands different from commercial bands for the multiplexing of quantum channels with conventional channels; using specific frequency ranges with less noise for quantum channels by means of making use of the optical characteristic of the AWG through which the signal assigned to that channel and its periodic signals pass in each channel.

In addition, for the mentioned applications with WDM-PON access network, in said multiplexing of quantum channels with conventional channels, the management unit introduces the quantum channels in a different period from that of the BLS (broadband light source) band and different from that of the downstream band (band displaced with respect to the BLS which is used in transmission signals for a downstream direction in the communication).

According to a preferred embodiment of the invention, the emission of the quantum signal is used in the entire frequency range of the mentioned period different from that of the BLS and downstream bands using either as many quantum channels as there are clients covering said range at a fixed frequency, or with one or several frequency-tunable quantum channels and the tuning of which is configurable.

Furthermore, according to a preferred embodiment of the invention, said period different from that of the BLS and downstream bands is a period right before the period of the mentioned BLS band.

In applications where the network is a WDM-PON access network, in addition to the filter and the management unit typical of the invention, the system has conventional equipment including at least one communication centralizing device, several user communication management devices and a shared line distributor by means of wavelength assignments.

In applications where the PON network is a TDM-PON access network (with time multiplexing), the management unit has electronic control means so that the devices for exchanging quantum information make exclusive use of time slots for exchanges, acting like a conventional time-multiplexed channel.

In said applications where the network is a TDM-PON access network, a 1550 nm channel or another channel located in a window of maximum transparency of the fiber-optic or of minimum disruption due to noise generated by conventional channels can be used as a quantum channel.

Furthermore, in these applications where the network is a TDM-PON access network, in addition to the filter and management unit typical of the invention, the system includes conventional equipment having at least a communication centralizing device, several user communication management devices and a splitter.

For applications where the PON network is a metropolitan area network with several nodes, in addition to the filter and the management unit typical of the invention, the system has conventional equipment including at least routing switches, WDM multiplexers, channel management multiplexers and emitting and receiving devices of conventional channels (transponders).

In the preferred embodiments of the invention, the attenuation of insertion power of conventional channels carried out by the management unit is applied in each case with the criterion of matching the distance between the ends of the quantum system with the maximum distance at which the pieces of equipment of the system can be connected, with that attenuation of power, in the PON network.

By using the frequency modulation (WDM) of different communication channels, the intensity and frequency with which effects such as Raman Scattering and FWM are reproduced depends on the power of the signal transmitted by each of the multiplexed channels. In the case of quantum channels, said power is usually insignificant; whereas in conventional channels the emission power of the transmitted signal depends on the maximum distance at which said signal is to be carried, and the impact of the effects of interference on quantum channels used depends on said power. Among the techniques which favor the coexistence of conventional and quantum channels, the reduction of the power at which the signals transmitted through the multiplexed communication channels are emitted entails a decrease of the maximum distance at which a signal can be transmitted in a conventional channel. At the same time, the reduction of the emission power entails a decrease of the impact of said signal on the remaining channels, whereas the selection of the frequency of conventional channels prevents the occurrence of the effects of intermodulation of signals in the frequencies used by quantum channels. Furthermore, the use of fine filtering at the destination of quantum channels allows isolating them from noise; and using different polarizations for quantum and conventional channels also helps prevent unnecessary noises in quantum channels, therefore increasing the quantum information correctly exchanged, the present invention being based on all this.

In addition to the foregoing, specifically for use in access networks with WDM technology, the invention proposes the use of periodicity of the wavelength distributor to use a specific frequency range with less noise like quantum channels. Accordingly, use of quantum information systems in PON networks is made compatible with use of simultaneous WDM channels, assuming certain limitations in conventional channels in terms of power, channels used and polarizations; the limitation of power being applied such that it minimizes the separation between the maximum distances at which the pieces of equipment of a PON network can be connected and the ends of a quantum system.

In PON metropolitan area networks, the invention mainly stresses the reduction of power of conventional channels such that error rates therein do not significantly increase. In addition, by means of control of the channels used, effects of intermodulation in quantum channels are prevented. Said quantum channels must be, to the extent possible, at selected frequencies to minimize effects of disruption, the effects of filtering of the channels and different polarization of conventional and quantum channels also being important in said metropolitan area networks.

In the TDM-PON networks, control of power in channels, use of filtering and different polarization of conventional and quantum channels have an attenuating effect on the noise produced in quantum channels. When the scenario of application of the invention has said TDM-PON networks, it is not necessary to take into account FWM control measures, because the number of conventional channels in currently existing standards is two. Furthermore, in this specific scenario it is possible that when necessary, the pieces of quantum information equipment can make exclusive use of time slots for exchanges, acting like a conventional time-multiplexed channel.

In WDM-PON networks, the solution facilitated by the invention makes use of the optical characteristic of AWG, according to which the signal assigned to that channel and its periodic signals pass through each channel. Said solution is used in conjunction with those provided by the invention for TDM-PON access networks in terms of channel management, for control of power and polarization thereof.

The most relevant advantages of the system of the invention relate to the increased efficiency in the combined use of PON networks and systems for transmission of quantum information. Generically, for any PON network it is necessary to make use of bandpass filters and also for powers of lasers involved in transmission of conventional channels to be adjusted according to the distance at which the signal is to be emitted so that the noise generated in the quantum channel is always minimum. Furthermore, in all the scenarios of application of the invention, the possibility of polarizing quantum and conventional channels differently to aid with filtering, as well as other solutions added specifically in each of said scenarios, are contemplated. Therefore, correct selection of conventional and quantum channels is necessary, as an added technique in a PON metropolitan area network, such that noise generated by intermodulation (FWM) of conventional channels is prevented. Quantum channels are also selected such that to the extent possible they can be located in channels with the lowest wavelength possible to minimize noise due to Raman scattering. The advantages of the invention for TDM-PON access networks consist of, in addition to facilitating attenuation of conventional channels and placement of filters, facilitating correct election of the quantum channel. Therefore, as indicated above, said quantum channel could be the 1550 nm channel for the specific case of GPON, which channel is for use of CATV or IPTV, or any other channel that is located in the window of maximum transparency of the fiber or in the window of minimum disruption due to noise generated by conventional channels; another advantage consisting of the possibility of reserving time slots for the exclusive use of quantum channels. The most important advantages of the invention when applied in WDM-PON access networks relate to the fact that in this scenario a new period in the distributor different from the one used by the broadband light source and downstream channels is used, such that this new period dedicated to quantum channels can be, in the case of each manufacturer, the most suitable according to the attenuation introduced by the optical transmission means according to the wavelength of the transmitted signals; according to what has been seen, it has been found that said new period can be a period right before the broadband light source.

To facilitate better understanding of this specification and forming an integral part thereof, a set of figures is attached below in which the object of the invention has been depicted with an illustrative and non-limiting character.

Brief Description of the Drawings

Figure 1 schematically depicts a first embodiment of a system for integration of channels with quantum information in communication networks carried out according to the present invention, wherein the network is a TDM-PON technology access network and the channel with quantum information is a QKD system.

Figure 2 schematically depicts a second embodiment of a system for integration of channels with quantum information in communication networks carried out according to the present invention, wherein the communication network is a WDM-PON access network and the channel with quantum information is a QKD system.

Figure 3 schematically depicts a third embodiment of a system for integration of channels with quantum information in communication networks carried out according to the present invention, wherein the network is a metropolitan area network with two PON nodes and PON technology, whereas the quantum channel is a QKD system.

Figure 4 schematically depicts a fourth embodiment of a system for integration of channels with quantum information in communication networks, wherein the network is a metropolitan area network with three MAN nodes and the quantum channel is a QKD system.

Figure 5 schematically depicts the current state of the art for a conventional communication system using the structure of a TDM-PON network.

Figure 6 schematically depicts the current state of the art for a conventional communication system using the structure of a WDM-PON network.

Figure 7 schematically depicts the current state of the art for a conventional communication system using a metropolitan area network with three PON technology nodes.

Description of one or several Embodiments of the Invention

Four embodiments of the invention are described below in reference to the reference numbers used in the drawings.

First a list with all the reference numbers 1 to 14 used in the drawings along with their meaning is provided below:

1: Communication centralizing device
2: User device for communication management
3: Fiber-optic segments
4: Splitter
5: Conventional and quantum channel management unit
6: Junction device for joining channels with filter for quantum channels
7: First device for the exchange of information by means of a quantum channel (Alice)
8: Second device for the exchange of information by means of a quantum channel (Bob)
9: Shared line distributor by means of wavelength assignments 10: Routing switch
11: WDM multiplexer
12: Channel management multiplexer
13: Emitting and receiving device of conventional channels (transponder)
14: Filter for quantum channel

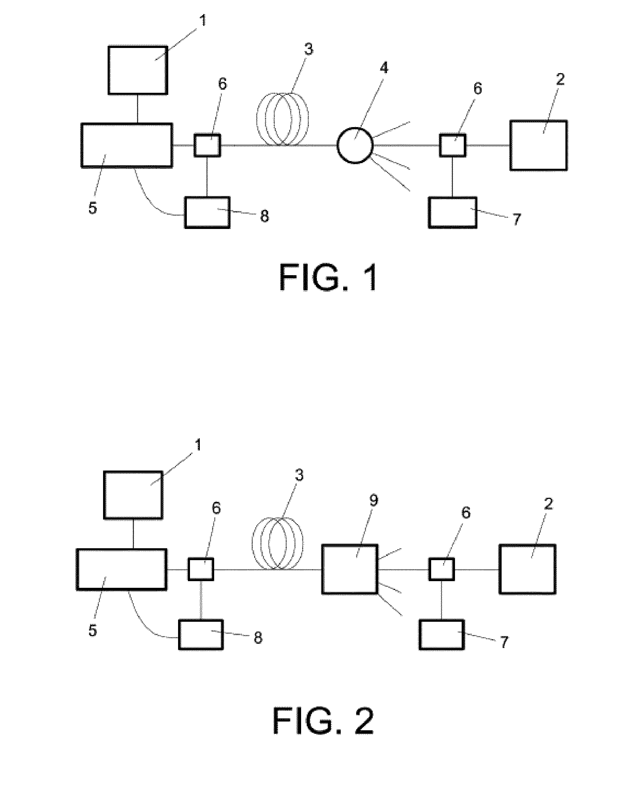

Figures 1 to 4 are developed, respectively, for the four embodiments of the invention shown in this section, said figures depicting different scenarios in which the invention can be of application for both metropolitan area networks and access networks, taking into account the different technologies that can be found in each of the proposed scenarios.

The unit 5 is the component intended for both conventional and quantum channel management, and can be seen applied in said Figures 1 to 4. Said management unit 5 is a component which decides the wavelengths assigned to each conventional channel and each quantum channel, as well as power of conventional channels. The decision-making criteria for the functions thereof are based on the need to reduce noise of quantum channels, such that their communication is more efficient. To that end, this management unit 5 performs the following tasks:

- Reducing insertion power of conventional channels, provided that channels are not interrupted.
- Temporarily disconnecting some conventional channels which have low priority.
- Polarizing conventional and quantum channels differently.
- Requesting change of wavelength in both conventional and quantum channels.

Furthermore, and also common in the four embodiments of the invention herein shown, each quantum channel has the narrowest bandpass filtering possible, this serving as an added measure to minimize noise either by means of the device 6 or the filter 14.

Within the channel management, in systems where TDM multiplexing exists, such as in Figure 1 for example, the management unit 5 could reserve time slots of exclusive use for quantum channels, such that during that time only said quantum channels are operating online, said number of slots being variable depending on the scenario.

In addition, manufacturers of WDM-PON devices currently use one band for the broadband light source signal carrying seed signals for user devices, such that the latter can connect to any channel indifferently. The head-end emits upstream channels in the same bands as BLS (broadband light source), whereas downstream transmission signals are emitted in a band displaced one period with respect to that of BLS, such that the distributor allows the passage of these signals in the opposite direction. When the invention is applied in a WDM-PON access network, such as that of Figure 2 for example, it provides the introduction of channels with quantum information in a period different from that of the BLS band and downstream band, making use of the same property that allows multiplexing said two bands. The problem of multiplexing of quantum channels with conventional channels is therefore solved in the most efficient manner possible. In addition, so that the solution provided is complete, use of emission of the quantum signal in the entire range of the chosen period is necessary. This can be done either with as many quantum channels as there are clients covering said range at a fixed frequency, or with one or several frequency-tunable quantum channels and the tuning of which is configurable. The number of these tunable channels to be used will depend on their characteristics in terms of how many channels are included in the distributor and the number of channels it has, i.e., the entire range to be covered.

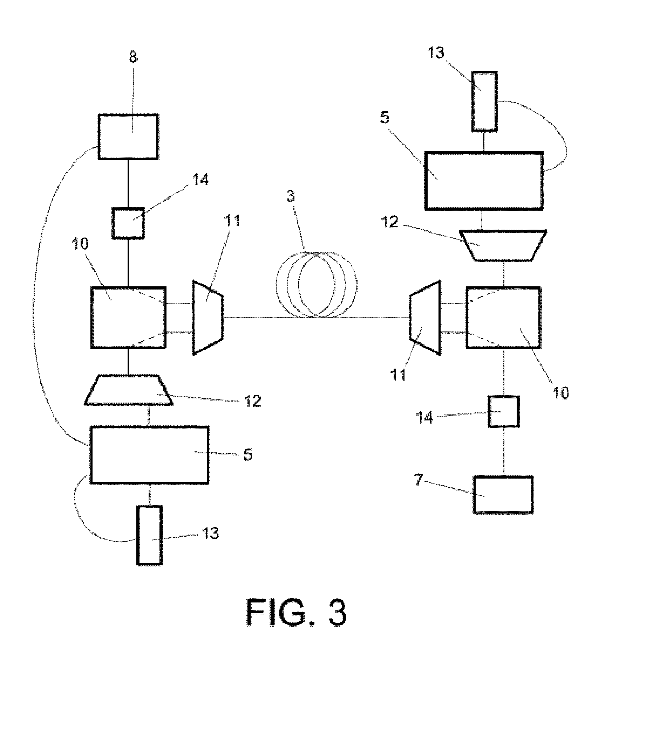

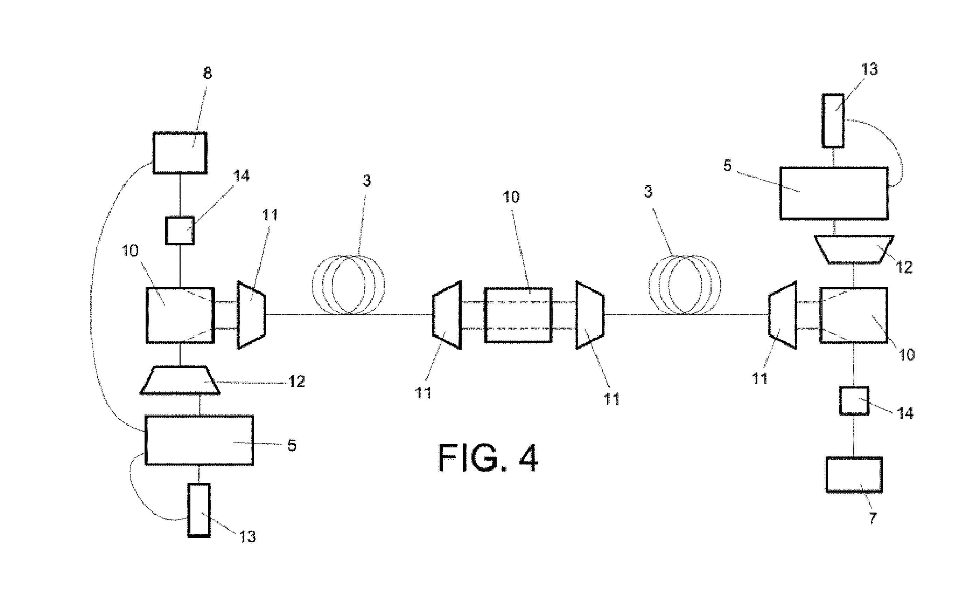

In Figures 3 and 4 the invention is applied transmitting a quantum channel in a metropolitan area network of two or three nodes respectively.

In TDM-PON access networks of the state of the art such as that shown in Figure 5, different users connected to one end of the network by means of respective user devices 1 share a single optical transmission line with the main end of the network in which there is a centralizing device 2, where the access provider is generally located. The optical transmission lines are joined by means of a splitter 4 located between both ends, allowing communication between all users and the access provider. A single fiber-optic or fiber-optic segment 3 linking with the splitter 4 comes out of the head-end, whereas coming out of the splitter there are multiple fibers each connecting with the corresponding device in the end user installations. In terms of the channels used, there are two frequencies, one intended for downstream communication and the other for upstream communication. The head-end is responsible for managing time slots allotted to each user device 2 that will only emit in those allotted.

Communication in a TDM-PON access network (according to current standards) is modulated in three frequencies using WDM technology to coexist in the line, which allows simultaneous use of the following three channels:

- A video channel transmitting from the head-end to the users. This channel is what has been used as the quantum channel for communication between the first and second devices for the exchange of information by means of a quantum channel with reference numbers 7 and 8 respectively.
- A downstream channel going from the head-end towards the different user devices. This signal is split when it passes through the splitter and sent simultaneously to all ends (users) connected.
- An upstream channel going from each user to the head-end. Time-division modulation (TDM) is used to manage the different users of this channel.

In this scenario, the main effect of intermodulation that can affect the quantum channel is Raman scattering, because there are not sufficient conventional channels to generate interferences due to intermodulation.

Generic components of the access network (TDM-PON) include:

- Centralizing device 1, located in the head-end of the service provider, centralizes all communications with users and is responsible for assigning time slots to each user.
- User device 2, located in the installations of each user, is responsible for managing communications with the head-end of the service provider.
- Splitter 4. This splitter connects the shared line (coming from the head-end) with each individual user line.
- First and second exchange devices 7 and 8, Alice and Bob. These devices perform the exchange of information by means of the quantum channel.
- Fiber-optic segments 3.

The components added by means of the invention, according to the first embodiment thereof shown in Figure 1, and for the integration of quantum channels in said TDM-PON access network are:

- The management unit 5, which is the device managing both quantum and conventional channels and is the essential element of the invention.

- The junction device 6 which is an element for joining channels in the fiber with the incorporation of a filter for the quantum channel.

In addition, in WDM-PON access networks of the state of the art, such as that shown in Figure 6, there are three main elements. One device on the service provider side (centralizing device 1), one device on the client side (user device 2), a fiber-optic or fiber-optic segment 3 between both and finally, a third distributor device 9 located in the fiber between the head-end and the users.

The distributor 9 is the device which allows multiplexing/demultiplexing all the corresponding channels and directing each one to a different client. Therefore, if the distributor 9 has a capacity for n clients, with a head-end, it can provide service simultaneously to n users. The distributor 9 further has the property that a signal with wavelength $\lambda i$ and all its periodic signals $\lambda i$-T (according to a typical period T defined in manufacture) are demultiplexed by the same channel of the distributor 9.

With respect to signals emitted in WDM-PON, there is an emission band for upstream channels and another one for downstream channels. Upstream channels are emitted from users to the head-end of the service provider, and downstream channels in the opposite direction.

The generic components of the WDM-PON access network, as shown in Figure 6, are:

- Centralizing device 1 located in the head-end of the service provider, centralizing all communications with the users and responsible for reassigning time slots to each user.
- User device 2, located in the installations of each user, responsible for managing communications with the head-end of the service provider.
- Distributor 9 connecting the shared line (coming from the head-end) with each individual user line. The distribution is done depending on wavelengths, splitting the band intended for the users among all user lines, and thus assigning a wavelength and all its periods to each line.
- First and second exchange devices 7 and 8 (Alice and Bob). The devices perform the exchange of information by means of the quantum channel; and
- Fiber-optic segments 3.

The components added by the invention, according to the second embodiment thereof shown in Figure 2 for the integration of quantum channels in said WDM-PON access network, are:

- Management unit 5 which is the device managing both quantum and conventional channels, being the essential element of the invention.

- Junction device 6 consisting of an element for joining channels in the fiber incorporating a filter for the quantum channel.

Figure 7 shows a metropolitan area network with three nodes according to the current state of the art, showing routing using ROADM technology, where three nodes are involved in the communication and having the following components:

- Routing switch 10 responsible for the switching of an incoming signal. Depending on its configuration it could extract the signal reaching the module (operation add-drop) or allow it to travel through the corresponding module or unit without being deviated (operation pass-through).
- Input and output channel management multiplexer 12.
- WDM multiplexer 11 performing add-drop of the quantum channel with respect to the remaining channels.
- Emitting and receiving device 13 (transponders) of conventional channels.
- Fiber-optic segments 3.

Figure 3, corresponding to the third embodiment of the invention, shows a configuration of a metropolitan area network with two nodes and transmission of a quantum channel, using the components of Figure 7 of the state of the art described above. Said Figure 3 depicts by way of example two nodes following the architecture of a metropolitan area network based on PON technology, such that the pieces of equipment of a quantum information transmission system used to exchange encrypting keys are connected to each of the nodes according to this third embodiment of the invention. Said nodes are communicated through a fiber-optic line 3. The core of each node is fundamentally made up of a switch and an add-drop forming a ROADM routing system. By means of the add-drop, one or various channels identified by pre-established wavelengths are extracted in each of the nodes. Each of these channels is normally used to transmit a signal in one direction or the other. In the example of said Figure 3, each of the channels is used for a different purpose. One of the channels is used conventionally, whereas the other one will be used as a quantum channel for the exchange of keys. The addressing of each of the channels extracted by add-drop is performed by means of switching. Addressing is performed by means of switching of two possibilities: add-drop of the channel or pass-through thereof.

The known components seen in said Figure 3 are those with references numbers 3 and 10 to 13, as explained above for Figure 7; whereas the components added by means of the invention in said Figure 3 for the integration of quantum channels consist of a quantum and conventional channel management unit 5 for the channels to be used in the scenario of this third embodiment and in a filter 14 for the quantum channel.

Figure 4, corresponding to the fourth embodiment of the invention, depicts a metropolitan area network with three nodes and transmission of a quantum channel. Said Figure 4 shows an example of routing using ROADM technology, wherein three nodes are involved in communication, such that two of these nodes coincide with the ends of a QKD system, and the communication travels through a third (intermediate) node that does not interfere in those exchanged by the end nodes.

Like in the preceding Figure 3, the known components shown in Figure 4 have reference numbers 3 and 10 to 13 as explained above for Figure 7; whereas the components added by the invention in said Figure 4 for the integration of quantum channels consist of a quantum and conventional channel management unit 5 for the channels to be used in the scenario of this fourth embodiment and in a filter 14 for the quantum channel.

**Claims**

1. A system for integration of channels with quantum information in communication networks, applicable in passive optical networks (PON) which can provide support to conventional telecommunication channels and to quantum channels; at least one quantum key distribution (QKD) system generating cryptographic keys between two ends for secret communications being able to be included in quantum channels; wherein the PON network includes fiber-optic segments (3) and conventional equipment (1, 2, 4, 9 to 13) whereas the QKD system has a first device for the exchange of information by means of a quantum channel (7) and a second device for the exchange of information by means of a quantum channel (8); **characterized in that** it comprises at least one filter (6, 14) for each of said devices for the exchange of information by means of a quantum channel (7, 8) and at least one conventional and quantum channel management unit (5) in the set of said system for integration; this management unit (5) being a device for the reduction of noise in quantum channels having at least the following functions:

   - attenuation of insertion power of conventional channels in the PON network;
   - different polarizations in the various conventional and quantum channels; and
   - changes of wavelength assignments in not only conventional but also quantum channels;

   effects of interference on quantum channels thereby being prevented.

2. The system for integration of channels with quantum information in communication networks according to claim 1, **characterized in that** said filter (6, 14) is the narrowest bandpass filter possible in the corresponding application.

3. The system for integration of channels with quantum information in communication networks according to claim 1 or 2, **characterized in that** said filter consists of either a device (6) which, in addition to the filter of the quantum channel, includes means for connecting channels in the fiber-optic segments (3) or else a single filter (14) intercalated in the quantum channel.

4. The system for integration of channels with quantum information in communication networks according to any one of the preceding claims, **characterized in that** the management unit (5) has, in addition to said functions, the function of temporary disconnection of specific conventional channels which have a low priority.

5. The system for integration of channels with quantum information in communication networks according to any one of the preceding claims, **characterized in that** in applications where the PON network is a WDM-PON access network (with frequency multiplexing) the management unit (5) uses frequency bands different from commercial bands for the multiplexing of quantum channels with conventional channels; using specific frequency ranges with less noise for quantum channels by means of making use of the optical characteristic of the AWG (Arrayed Waveguide Grating) through which the signal assigned to that channel and its periodic signals pass in each channel.

6. The system for integration of channels with quantum information in communication networks according to claim 5, **characterized in that** in said multiplexing the management unit (5) introduces the quantum channels in a different period from that of the BLS (broadband light source) band and different from that of the downstream band (band displaced with respect to the BLS which is used in transmission signals for a downstream direction in the communication).

7. The system for integration of channels with quantum information in communication networks according to claim 6, **characterized in that** the emission of the quantum signal is used in the entire frequency range of said different period using either as many quantum channels as there are clients covering said range at a fixed frequency, or with one or several frequency-tunable quantum channels and the tuning of which is configurable.

8. The system for integration of channels with quantum information in communication networks according to claim 6 or 7, **characterized in that** said different period is a period right before the period of said BLS band.

9. The system for integration of channels with quantum information in communication networks according to any one of claims 5 to 8, **characterized in that** the mentioned conventional equipment includes at least one communication centralizing device (1), several user communication management devices (2) and a shared line distributor by means of wavelength assignments (9) .

10. The system for integration of channels with quantum information in communication networks according to any one of claims 1 to 4, **characterized in that** in applications where the PON network is a TDM-PON access network (with time multiplexing) the management unit (5) has electronic control means so that the devices for exchanging quantum information (7, 8) make exclusive use of time slots for exchanges, acting like a conventional time-multiplexed channel.

11. The system for integration of channels with quantum information in communication networks according to claim 10, **characterized in that** a 1550 nm channel or another channel located in a window of maximum transparency of the fiber-optic or of minimum disruption due to noise generated by conventional channels is used as a quantum channel.

12. The system for integration of channels with quantum information in communication networks according to claim 10 or 11, **characterized in that** the mentioned conventional equipment includes at least one communication centralizing device (1), several user communication management devices (2) and a splitter (4).

13. The system for integration of channels with quantum information in communication networks according to any one of claims 1 to 4, **characterized in that** in applications where the PON network is a metropolitan area network with several nodes, the mentioned conventional equipment includes at least routing switches (10), WDM multiplexers (11), channel management multiplexers (12) and emitting and receiving devices of conventional channels (transponders) (13).

14. The system for integration of channels with quantum information in communication networks according to any one of the preceding claims, **characterized in that** the attenuation of insertion power of conventional channels carried out by the management unit (5) is applied in each case with the criterion of matching the distance between the ends of the quantum system with the maximum distance at which the pieces of equipment of the system can be connected, with that attenuation of power, in the PON network.

FIG. 1

FIG. 2

FIG. 3

FIG. 4

FIG. 5

(STATE OF THE ART)

FIG. 6

(STATE OF THE ART)

**FIG. 7**

(STATE OF THE ART)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 2126143
- US 7248695 B
- US 20070212063 A
- EP 94925577 A

### Non-patent literature cited in the description

- Quantum cryptography: public key distribution and coin tossing. **C. H. BENNETT ; G. BRASSARD.** Proceedings of IEEE International Conference on Computers, Systems and Signal Processing. IEEE press, 1984, 175-179
- **A. EKERT.** Quantum Cryptography Based on Bell's Theorem. *Phys. Rev. Lett.,* 1991, vol. 67 (6), 661-663
- **C. H. BENNETT.** Quantum Cryptography Using Any Two Nonorthogonal States. *Phys. Rev. Lett.,* 1992, vol. 68 (21), 3121
- **V. SCARANI ; A. ACIN ; G. RIBORDY ; N. GISIN.** Quantum cryptography protocols robust against photon number splitting attacks for weak laser pulse implementations. *Phys. Rev. Lett.,* 2002, vol. 92
- **N. GISIN et al.** Quantum Cryptography. *Rev. Mod. Phys.,* 2001, vol. 74, 145
- **G. BRASSARD ; L. SALVAIL.** Secret-key reconciliation by public discussion. *Lecture Notes in Computer Science,* 1993, vol. 765, 411-423
- **C. H. BENNETT et al.** Privacy amplification by public discussion. *SIAM J. Comput.,* 1988, vol. 17 (2
- **C. H. BENNETT et al.** Generalized Privacy Amplification. *IEEE Transactions on Information Theory,* 1995, vol. 41 (6
- **C. ELLIOTT et al.** Current status of the DARPA Quantum Network. *BBN Technologies,* 2005
- **AMITABHA BANERJEE et al.** *Wavelength-division-multiplexed passive optical network (WDM-PON) technologies for broadband Access: a review,* 2005